# EUROPÄISCHE PATENTSCHRIFT

(11) **EP 3 154 804 B1**
(45) Veröffentlichungstag und Bekanntmachung des Hinweises auf die Patenterteilung: **15.12.2021**
(21) Anmeldenummer: 15732174.6
(22) Anmeldetag: 09.06.2015
(51) Int. Cl.: B60J 7/00, B60Q 3/00

(54) **ABSCHATTUNGSANORDNUNG EINES FAHRZEUGDACHS**
SHADOWING ARRANGEMENT OF A VEHICLE ROOF
DISPOSITIF D'OMBRAGE D'UN TOIT DE VÉHICULE

(30) Priorität: 10.06.2014 DE 102014108119
(43) Veröffentlichungstag der Anmeldung: 19.04.2017
(73) Patentinhaber: Webasto SE, 82131 Stockdorf (DE)
(72) Erfinder: SCHUETT, Thomas, 82131 Stockdorf (DE); ROCKELMANN, Andreas, 82131 Stockdorf (DE); BOEHM, Hubert, 82131 Stockdorf (DE); RICHTHOFEN, Thorsten, 82131 Stockdorf (DE); THANNHEIMER, Johannes, 82131 Stockdorf (DE); LORENZ, Steffen, 82131 Stockdorf (DE)
(74) Vertreter: advotec.
(86) Internationale Anmeldenummer: PCT/EP2015/062786
(87) Internationale Veröffentlichungsnummer: WO 2015/189178

(56) Entgegenhaltungen:
- EP-A1- 2 135 761
- WO-A1-2011/007070
- DE-A1- 10 313 068
- DE-A1-102005 055 828
- DE-A1-102011 103 319
- FR-A1- 2 861 665
- FR-A1- 2 991 931
- KR-A- 20090 115 543
- KR-A- 20100 020 318

## Beschreibung

Die Erfindung betrifft eine Abschattungsanordnung eines transparenten Dachabschnitts eines Kraftfahrzeugs gemäß dem Oberbegriff des Patentanspruchs 1.

Derartige Abschattungsanordnungen sind aus der Praxis bekannt und beispielsweise als Rolloanordnung ausgeführt, die eine Rollobahn umfasst, die zur Abschattung eines transparenten Dachausschnitts des betreffenden Kraftfahrzeuges von einer Wickeleinrichtung abwickelbar ist bzw. zur Freigabe des transparenten Dachausschnitts auf die Wickeleinrichtung aufwickelbar ist. An einem sich in Fahrzeugquerrichtung erstreckenden Rand ist die Rollobahn an die insbesondere als Wickelwelle ausgebildete Wickeleinrichtung angebunden. An ihren bezogen auf eine vertikale Dachlängsmittelebene beidseits angeordneten Rändern ist die Rollobahn jeweils in einer sich in Fahrzeugslängsrichtung erstreckenden Führungsschiene geführt. Damit kann die Rollobahn in Fahrzeugquerrichtung straff gehalten werden.

Alternativ ist es aus der Praxis bekannt, zur Abschattung eines transparenten Dachabschnitts eines Kraftfahrzeuges einen so genannten Schiebehimmel einzusetzen, der einen starren, plattenartigen Trägerkörper aufweist, der über seitliche Gleiter in seitlich angeordneten, sich in Fahrzeuglängsrichtung erstreckenden Führungsschienen geführt ist.

Bei bekannten Kraftfahrzeugen ist zur Beleuchtung eines Fahrzeuginnenraums im Himmelbereich in der Regel eine Leuchte angeordnet. Diese Leuchte ist häufig bugseitig eines Dachausschnitts angeordnet. Zusätzlich kann oberhalb einer Rückbank des betreffenden Fahrzeugs eine weitere Leuchte vorgesehen sein, die zur Ausleuchtung des Fahrzeugfonds dient.

Aus der Druckschrift WO 2011/007070 A1 ist ein Fahrzeugdach mit einer Abschattungsanordnung bekannt, die ein als Beschattungsbahn ausgebildetes flächiges Abschattungselement aufweist. In einer seitlichen Führungsschiene ist eine Beleuchtungseinrichtung angeordnet, welche das Abschattungselement an seiner Unterseite indirekt beleuchtet.

Der Erfindung liegt die Aufgabe zugrunde, eine gemäß der einleitend genannten Gattung ausgebildete Abschattungsanordnung zu schaffen, die eine optimierte Ausbildung eines Himmelbereichs eines Fahrzeuginnenraums ermöglicht.

Diese Aufgabe ist erfindungsgemäß durch die Abschattungsanordnung mit den Merkmalen des Patentanspruchs 1 gelöst.

Erfindungsgemäß wird also eine Abschattungsanordnung eines transparenten Dachabschnitts eines Kraftfahrzeugs vorgeschlagen, die ein Abschattungselement umfasst, das zwischen einer Abschattungsstellung und einer Freigabestellung verstellbar ist und eine einen Fahrzeuginnenraum zugewandte Unterseite und eine einer Fahrzeugumgebung zugewandte Oberseite aufweist. Des Weiteren umfasst die Abschattungsanordnung eine indirekte Beleuchtungseinrichtung, die das Abschattungselement von seiner Oberseite und/oder von seiner Unterseite beleuchtet, wobei das Abschattungselement einen Lichteffektstoff umfasst, der mit der Beleuchtungseinrichtung zusammenwirkt.

Der Kern der Erfindung liegt mithin darin, dass der Fahrzeuginnenraum insofern indirekt beleuchtet wird, dass die Beleuchtung nicht in Richtung des Fahrzeuginnenraums gerichtet ist, sondern auf das Abschattungselement gerichtet ist, das mit dem Lichteffektstoff ausgestattet ist. Durch das Anleuchten wird der Lichteffektstoff aktiviert, was wiederum zu einem zumindest bereichsweisen Leuchten des Abschattungselements führt. Gegebenenfalls kann hierdurch der Fahrzeuginnenraum beleuchtet bzw. ausgeleuchtet werden. Da der Lichteffektstoff kundenspezifisch an dem Abschattungselement ausgebildet sein kann, bestehen hinsichtlich des Designs und der Funktion des leuchtenden Abschattungselements vielfältige Variationsmöglichkeiten. Insbesondere können durch den Lichteffektstoff auch Logos und Schriftzüge dargestellt werden.

Bei einer Ausführungsform der Abschattungsanordnung nach der Erfindung ist der Lichteffektstoff von einem phosphoreszierenden oder fluoreszierenden Material gebildet, das auf das Abschattungselement an dessen Unterseite und/oder dessen Oberseite aufgebracht ist und insbesondere als aufgedruckte Paste ausgebildet sein kann.

Alternativ oder zusätzlich kann der Lichteffektstoff von phosphoreszierenden oder fluoreszierenden Garnen gebildet sein. Diese können in ein textiles Material des Abschattungselements eingewebt oder eingewirkt sein. Denkbar ist es auch, dass das Abschattungselement ausschließlich aus phosphoreszierenden oder fluoreszierenden Garnen gewebt oder gewirkt ist.

Das phosphoreszierende oder fluoreszierende Material wird durch die Anleuchtung mittels der indirekten Beleuchtung aktiviert.

Bei einer alternativen Ausführungsform der Abschattungsanordnung nach der Erfindung ist der Lichteffektstoff aus einem reflektierenden Material gebildet, mit dem das Abschattungselement versehen ist.

Erfindungsgemäß, ist das reflektierende Material aus reflektierenden Garnen gebildet, die in ein textiles Material des Abschattungselements eingewebt oder eingewirkt sind. Die reflektierenden Garne können bereichsweise oder auch vollflächig in das flächige Abschattungselement eingearbeitet sein, beispielsweise nur in einem Randbereich des Abschattungselements, so dass eine gezielte Randbeleuchtung der Abschattungsanordnung realisiert ist.

Als reflektierendes Material können aber auch eine reflektierende Paste, eine reflektierende Appretur und/oder eine reflektierende Kaschierung auf das Abschattungselement aufgebracht sein.

Durch die reflektierende Ausbildung der Abschattungsanordnung nach der Erfindung kann mit geringen Kosten eine gute Ausleuchtung eines Fahrzeuginnenraums erreicht werden, die darüber hinaus eine homogene Anmutung haben kann.

Um eine Farbe der erfindungsgemäß realisierten Beleuchtung des flächigen Abschattungselements wählen zu können, können bei einer Ausführungsform mit reflektierenden Garnen die Garne einer entsprechende Behandlung unterzogen sein, so dass eine farbspezifische Reflexion des von der indirekten Beleuchtungseinrichtung abgegebenen Lichts erfolgt.

Bei einer alternativen Ausführungsform der Abschattungsanordnung nach der Erfindung umfasst der Lichteffektstoff ein Diffusormaterial, das eine punktuelle Beleuchtung in einen flächigen Lichteffekt umsetzt. Dies ist beispielsweise mit einem Effektgewebe erreichbar, das durch Interaktion mit einer LED-Hinterleuchtung variable, dreidimensionale Lichteffekte erzeugt. Es können damit räumliche Strukturen aus Licht mit Tiefenwirkung, mit einer Vielzahl an Effekten, Formen und Farben realisiert werden. Bekannte Effektgewebe sind mit unterschiedlichen optischen Eigenschaften und Materialkennwerten erhältlich. Es lassen sich damit Effekte unterschiedlicher Intensität, Länge, Helligkeit, Form und Tiefe erzeugen. Die Oberflächen können unterschiedliche Transmissionswerte und Farben aufweisen. Bei der Verwendung eines als Diffusor wirkenden Materials, das von der Beleuchtungseinrichtung beleuchtet werden kann, kann das Licht also so verteilt werden, dass aus einer punktuellen Hinterleuchtung eine flächige Beleuchtung oder auch ein spezielles Muster resultiert.

Das Abschattungselement kann eine Textilbahn, insbesondere eine Rollobahn umfassen.

Bei einer speziellen Ausführungsform der Abschattungsanordnung nach der Erfindung ist die Textilbahn an ihrer Oberseite beleuchtet und als Abstandsgewirke ausgebildet, das an seiner Oberseite mit dem phosphoreszierenden oder fluoreszierenden Material versehen ist. Insbesondere kann die Oberseite des Abstandsgewirkes mit dem phosphoreszierenden oder fluoreszierenden Stoff bedruckt sein. Durch ein Hinterleuchten des Abstandsgewirkes, das heißt ein Beleuchten der Oberseite des Abstandsgewirkes, kann das von dem phosphoreszierenden oder fluoreszierenden Material abgegebene Licht durch die von dem Abstandsgewirke gebildete Stoffkonstruktion in den Fahrzeuginnenraum durchscheinen. Denkbar ist es auch, das Abstandsgewirke an seiner Oberseite mit speziellen phosphoreszierenden oder fluoreszierenden Garnen zu versehen.

Bei einer Ausbildung des Abschattungselements mit einer Textilbahn kann die Beleuchtungseinrichtung in einen Zugspriegel der Textilbahn und/oder in ein hinteres Dachrahmenteil integriert sein.

Alternativ kann das Abschattungselement auch ein Schiebehimmel sein. Bei einer Ausbildung des Abschattungselements als Schiebehimmel kann die Beleuchtungseinrichtung in einen starren und flächigen Trägerkörper des Schiebehimmels integriert sein.

Bei einer bevorzugten Ausführungsform der Abschattungsanordnung nach der Erfindung ist die Beleuchtungseinrichtung aber an seitlichen Führungsschienen angeordnet, in denen das Abschattungselement geführt ist. Je nach Ausführungsform kann die Beleuchtungseinrichtung oberhalb oder unterhalb der Ebene des Abschattungselements an den Führungsschienen angeordnet sein.

Vorzugsweise ist die Beleuchtungseinrichtung aus LEDs gebildet. Dies stellt eine kostengünstige Beleuchtungsart dar, bei der hinsichtlich der Farbgebung große Variationsmöglichkeiten bestehen. Auch kann die Beleuchtungseinrichtung einen Lichtleiter umfassen, wobei an mindestens einem Ende des Lichtleiters mindestens eine LED angeordnet sein kann.

Weitere Vorteile und vorteilhafte Ausgestaltungen des Gegenstandes der Erfindung sind der Beschreibung, der Zeichnung und den Patentansprüchen entnehmbar.

Ausführungsbeispiele einer Abschattungsanordnung nach der Erfindung sind in der Zeichnung schematisch vereinfacht dargestellt und werden in der nachfolgenden Beschreibung näher erläutert. Es zeigt:
- Figur 1: eine schematische Draufsicht auf ein Dach eines Kraftfahrzeuges mit einer Rolloanordnung nach der Erfindung;
- Figur 2: einen schematischen Schnitt durch die Rolloanordnung nach Figur 1 entlang der Linie II-II in Figur 1;
- Figur 3: einen Schnitt durch eine alternative Ausführungsform einer Rollobahn;
- Figur 4: einen Schnitt durch einen Schiebehimmel einer alternativen Ausführungsform einer Abschattungsanordnung nach der Erfindung;
- Figur 5: eine Unteransicht des Schiebehimmels;
- Figur 6: einen Figur 2 entsprechenden Schnitt einer Rolloanordnung gemäß einer weiteren alternativen Ausführungsform; und
- Figur 7: einen Figur 2 entsprechenden Schnitt einer Rolloanordnung gemäß einer weiteren alternativen Ausführungsform.

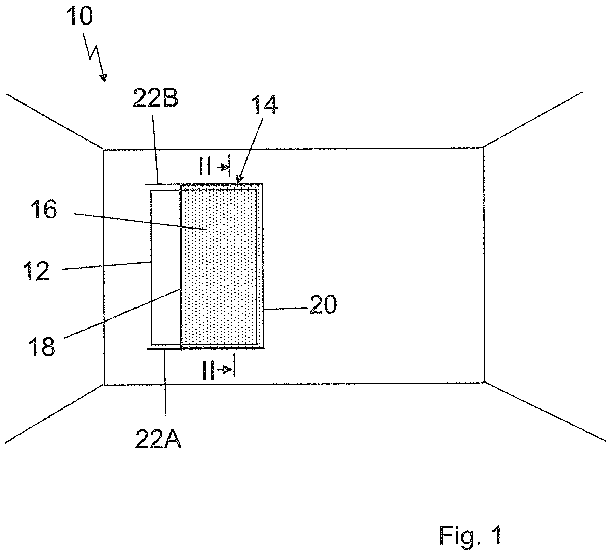

In Figur 1 ist ein Fahrzeugdach 10 eines ansonsten nicht näher dargestellten Personenkraftwagens gezeigt, das einen Dachausschnitt 12 aufweist, welcher mittels eines hier nicht näher dargestellten, transparenten Deckelelements eines Dachöffnungssystems geschlossen oder zumindest teilweise freigegeben werden kann.

Zur Abschattung des Dachausschnitts 12 umfasst das Fahrzeugdach 10 eine Rolloanordnung 14, die eine Abschattungsanordnung darstellt und eine Rollobahn 16 aus einem faltbaren bzw. wickelbaren Stoff aufweist.

An ihrer freien Stirnseite weist die Rollobahn 16 einen Zugspriegel 18 auf. An ihrem dem Zugspriegel 18 abgewandten Rand ist die Rollobahn 16 an einer sich in Fahrzeugquerrichtung erstreckenden Wickelwelle 20 aufwickelbar. Die Wickelwelle 20 umfasst hierzu ein drehbar gelagertes Wickelrohr, das mittels einer Wickelfeder in Aufwickelrichtung der Rollobahn 16 vorgespannt ist. Bei einer Freigabe des Zugspriegels 18 bzw. bei einem Verfahren des Zugspriegels 18 in Richtung der Wickelwelle 20 kann sich damit die Rollobahn 16 selbsttätig auf die Wickelwelle 20 aufwickeln.

Die Rollobahn 16 und der Zugspriegel 18 sind bezogen auf eine vertikale Dachlängsmittelebene beidseits jeweils in einer dachfesten Führungsschiene 22A bzw. 22B geführt, die sich entlang eines jeweiligen seitlichen Randes des Dachausschnitts 12 erstreckt. Die Führungsschienen 22A und 22B können Bestandteil des Dachöffnungssystems sein oder auch nur der Rolloanordnung 14 zugeordnet sein.

Die Betätigung der Rolloanordnung 14 kann in manueller Weise oder auch mittels eines entsprechenden elektrischen Antriebs erfolgen.

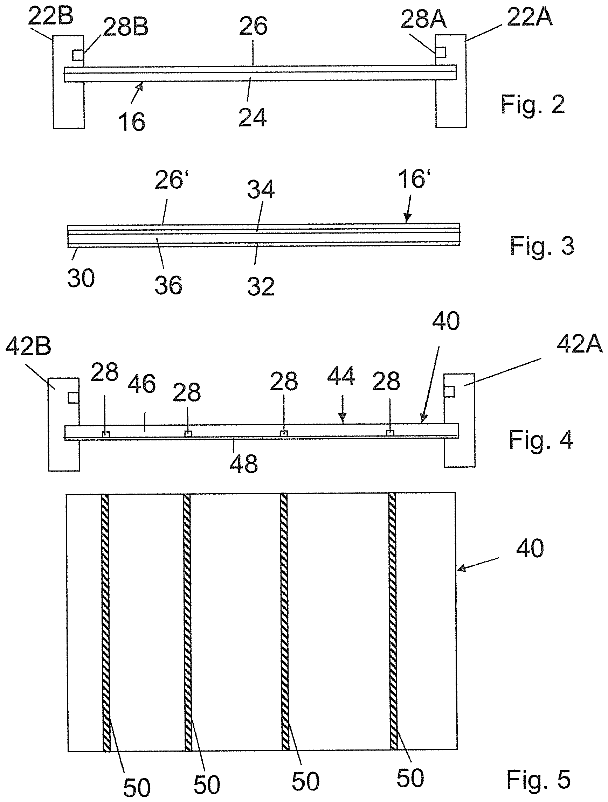

Die Rollobahn 16, die zusammen mit den Führungsschienen 22A und 22B Figur 2 als Schnittdarstellung zu entnehmen ist und ein Abschattungselement der Rolloanordnung 14 darstellt, umfasst einen flächig ausgebildeten Trägerstoff 24 aus einem textilen Material, der eine einem Fahrzeuginnenraum zugewandte Unterseite und eine der Fahrzeugumgebung zugewandte Oberseite aufweist. An der Oberseite ist auf den Trägerstoff eine Schicht 26 aus einer phosphoreszierenden oder fluoreszierenden Paste aufgedruckt, im vorliegenden Fall vollflächig. Alternativ könnte die Paste auch gemäß einem bestimmten Muster auf den Trägerstoff 24 aufgedruckt sein.

Die Führungsschienen 22A und 22B weisen an ihren der vertikalen Dachlängsmittelebene zugewandten Innenseiten jeweils eine indirekte Beleuchtungseinrichtung 28A bzw. 28B auf, die aus mehreren in Längsrichtung der jeweiligen Führungsschiene 22A bzw. 22B verteilten und oberhalb der Ebene der Rollobahn 16 angeordneten LEDs gebildet ist.

Bei einer Aktivierung der Beleuchtungseinrichtungen 28A und 28B, die bezüglich des Fahrzeuginnenraums eine indirekte Beleuchtungseinrichtung darstellt, wird die Oberseite der Rollobahn 16 beleuchtet, so dass die aus der Paste gebildete Schicht 26 aus phosphoreszierenden oder fluoreszierenden Material aktiviert wird, das heißt zu leuchten beginnt, und durch den Trägerstoff 24 hindurch eine Beleuchtung des Fahrzeuginnenraums ermöglicht. Die Schicht 26 ist also aus einem Lichteffektstoff gebildet.

In Figur 3 ist ein Schnitt einer alternativen Ausführungsform einer Rollobahn 16' dargestellt, die bei der in Figur 1 dargestellten Rolloanordnung 14 anstelle der Rollobahn 16 eingesetzt werden kann. Die Rollobahn 16' ist aus einem Abstandsgewirke 30 gebildet, d. h. aus kettengewirkten Warenflächen 32 und 34, die durch abstandhaltende Polfäden 36 auf Distanz gehalten werden. Die der Fahrzeugumgebung zugewandte Warenfläche 34, das heißt die Oberseite der Rollobahn 16' ist wiederum mit einer Paste bedruckt, die aus einem phosphoreszierenden oder fluoreszierenden Material gebildet ist. Die Schicht 26' ist also aus einem Lichteffektstoff gebildet. Bei einer Beleuchtung der Oberseite der Rollobahn 16', die mit der Schicht 26' versehen ist, erfolgt eine Beleuchtung des Fahrzeuginnenraums durch die Warenflächen 32 und 34 hindurch.

Bei einer alternativen Ausführungsform eines Abstandsgewirkes, das durch die in den Führungsschienen 22A und 22B angeordneten Beleuchtungseinrichtungen 28A und 28B zum Leuchten angeregt werden kann, ist die an der Oberseite angeordnete Warenfläche aus speziellen Garnen gebildet, die phosphoreszierende oder fluoreszierende Eigenschaften haben. Insbesondere können in die Warenfläche 34 Garne derart eingewirkt sein, dass bei Beleuchtung mittels der Beleuchtungseinrichtungen 28A und 28B ein Logo und/oder ein Schriftzug in der Rollobahn aufleuchtet.

In den Figuren 4 und 5 ist eine Abschattungsanordnung 40 dargestellt, die seitliche Führungsschienen 42A und 42B aufweist, in denen ein Schiebehimmel 44 verschiebbar geführt ist. Der Schiebehimmel 44, der ein Abschattungselement darstellt, dient zur zumindest teilweisen Abschattung eines transparenten Dachabschnitts eines Kraftfahrzeugs.

Der Schiebehimmel 44 umfasst einen im Wesentlichen starren und flächigen Trägerkörper 46, an dessen Unterseite, das heißt an der dem Fahrzeuginnenraum zugewandten Seite ein Stoff aufkaschiert ist, der bereichsweise aus einem einen Lichteffektstoff bildenden Diffusormaterial besteht, das eine punktuelle Beleuchtung in einen flächigen Lichteffekt umsetzt. Hierzu sind in den Trägerkörper 46 an der Unterseite LEDs integriert, die eine indirekte Beleuchtungseinrichtung 28 darstellen und bei deren Aktivierung das abgegebene Licht gemäß den in Figur 5 dargestellten Streifen 50 in ein streifenförmiges Muster des Stoffes 48 umgesetzt wird.

Zur elektrischen Anbindung an das Fahrzeugnetz sind die LEDs mit an den Rändern des Trägerkörpers 46 ausgebildeten Gleitkontakte verbunden, die mit korrespondierenden Gleitkontakten in den Führungsschienen 42A und 42B zusammenwirken.

Bei einer alternativen Ausführungsform kann ein Effektstoff, der ein Diffusormaterial umfasst, gemäß der in den Figuren 1 und 2 dargestellten Rolloanordnung als Rollobahn eingesetzt werden. In diesem Falle kann die Beleuchtung der Rollobahn ebenfalls über eine in den Führungsschienen angeordnete Beleuchtungseinrichtung oder auch über eine in dem Zugspriegel oder in einem hinteren Dachrahmenteil angeordnete Beleuchtungseinrichtung erfolgen.

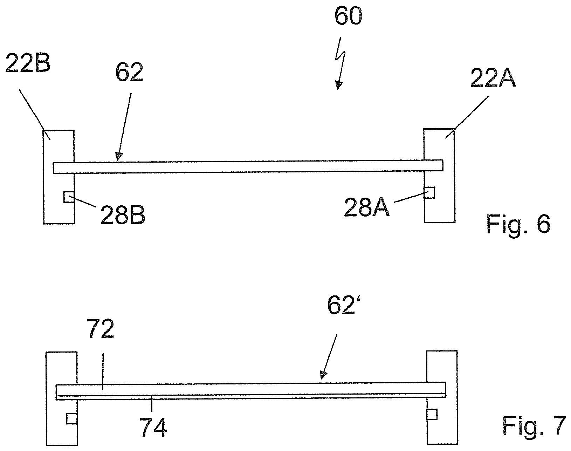

In Figur 6 ist eine weitere Ausführungsform einer Abschattungsanordnung nach der Erfindung dargestellt. Diese Abschattungsanordnung ist eine Rolloanordnung 60, die entsprechend der Ausführungsform nach den Figuren 1 und 2 seitliche Führungsschienen 22A und 22B umfasst, in denen eine ein Abschattungselement bildende Rollobahn 62 mit ihren seitlichen Rändern geführt ist.

Die Rollobahn 62 ist aus einem Gewebe oder Gewirke gefertigt, das zumindest anteilig aus reflektierenden Garnen gefertigt ist. Die reflektierenden Garne können bereichsweise, beispielsweise nur im an die Führungsschienen 22A und 22B angrenzenden Randbereich oder auch vollflächig in den Stoff der Rollobahn 62 eingewebt oder eingewirkt sein.

Die Führungsschienen 22A und 22B weisen an ihren der vertikalen Dachlängsmittelebene zugewandten Innenseiten jeweils unterhalb der Ebene der Rollobahn 62 eine aus LEDs gebildete Beleuchtungseinrichtung 28A bzw. 28B auf, mittels derer die Rollobahn 62 von unten beleuchtet werden kann. Über das Reflektionsvermögen der Rollobahn 62 aufgrund der eingearbeiteten reflektierenden Garne kann damit der Fahrzeuginnenraum in indirekter Weise beleuchtet oder ausgeleuchtet werden.

In Figur 7 ist eine weitere alternative Ausführungsform einer Rolloanordnung 70 dargestellt, die im Wesentlichen derjenigen nach Figur 6 entspricht, sich von dieser aber dadurch unterscheidet, dass sie eine Rollobahn 62' aufweist, die eine Trägerlage 72 aus einem textilen Material aufweist, die an ihrer Unterseite, das heißt an der dem Fahrzeuginnenraum zugewandten Seite eine Schicht 74 aus phosphoreszierenden und/oder fluoreszierenden Material trägt. Die Schicht 74 kann aus aufgebrachten Garnen, Pasten, Appreturen oder einer Kaschierung gebildet sein.

### Bezugszeichenliste

- 10: Fahrzeugdach
- 12: Dachausschnitt
- 14: Rolloanordnung
- 16: Rollobahn
- 18: Zugspriegel
- 20: Wickelwelle
- 22A, B: Führungsschiene
- 24: Trägerstoff
- 26: Schicht
- 28A, B: Beleuchtungseinrichtung
- 30: Abstandsgewirke
- 32: Warenfläche
- 34: Warenfläche
- 36: Polfaden
- 40: Abschattungsanordnung
- 42A, B: Führungsschienen
- 44: Schiebehimmel
- 46: Trägerkörper
- 48: Stoff
- 50: Streifen
- 60: Rolloanordnung
- 62: Rollobahn
- 70: Rolloanordnung
- 72: Trägerlage
- 74: Schicht

## Patentansprüche

1. Abschattungsanordnung eines transparenten Dachabschnitts eines Kraftfahrzeuges, umfassend ein flächiges Abschattungselement, das zwischen einer Abschattungsstellung und einer Freigabestellung verstellbar ist und eine einem Fahrzeuginnenraum zugewandte Unterseite und eine einer Fahrzeugumgebung zugewandte Oberseite aufweist, wobei eine indirekte Beleuchtungseinrichtung (28, 28A, 28B) vorgesehen ist, wobei die indirekte Beleuchtungseinrichtung (28, 28A, 28B) das Abschattungselement von seiner Oberseite und/oder von seiner Unterseite beleuchtet, **dadurch gekennzeichnet, dass** das Abschattungselement einen Lichteffektstoff umfasst, der mit der Beleuchtungseinrichtung (28, 28A, 28B) zusammenwirkt, wobei der Lichteffektstoff entweder von einem phosphoreszierenden und/oder fluoreszierenden Material gebildet ist, das auf das Abschattungselement an dessen Unterseite und/oder dessen Oberseite aufgebracht ist, oder von phosphoreszierenden und/oder fluoreszierenden Garnen gebildet ist oder aus einem reflektierenden Material gebildet ist, das aus reflektierenden Garnen gebildet ist, die in ein textiles Material des Abschattungselements eingewebt oder eingewirkt sind, oder ein Diffusormaterial umfasst, das eine punktuelle Beleuchtung in einen flächigen Lichteffekt umsetzt.

2. Abschattungsanordnung nach Anspruch 1, **dadurch gekennzeichnet, dass** das phosphoreszierende und/oder fluorezierende Material eine aufgedruckte Paste ist.

3. Abschattungsanordnung nach Anspruch 1 oder 2, **dadurch gekennzeichnet, dass** das Abschattungselement eine Textilbahn, insbesondere eine Rollobahn umfasst.

4. Abschattungsanordnung nach Anspruch 3, **dadurch gekennzeichnet, dass** die Textilbahn von ihrer Oberseite beleuchtet ist und als Abstandsgewirke ausgebildet ist, das an seiner Oberseite mit dem phosphoreszierenden und/oder fluoreszierenden Material versehen ist.

5. Abschattungsanordnung nach Anspruch 3 oder 4, **dadurch gekennzeichnet, dass** die Beleuchtungseinrichtung in einen Zugspriegel der Textilbahn integriert ist.

6. Abschattungsanordnung nach einem der Ansprüche 1 bis 5, **dadurch gekennzeichnet, dass** das Abschattungselement in seitlichen Führungsschienen (22A, 22B) geführt ist und die Beleuchtungseinrichtung an den Führungsschienen (22A, 22B) angeordnet ist.

7. Abschattungsanordnung nach einem der Ansprüche 1 bis 6, **dadurch gekennzeichnet, dass** die Beleuchtungseinrichtung (28) LEDs umfasst.

8. Abschattungsanordnung nach einem der Ansprüche 1 bis 7, **dadurch gekennzeichnet, dass** die Beleuchtungseinrichtung einen Lichtleiter umfasst und vorzugsweise an mindestens einem Ende des Lichtleiters mindestens eine LED angeordnet ist.

## Claims

1. A shading arrangement of a transparent roof section of a motorcar, the shading arrangement comprising an areal shading element which is displaceable between a shading position and an uncovering position and comprises a lower side facing towards a vehicle interior and an upper side facing towards a vehicle environment, an indirect illuminating device (28, 28A, 28B) being provided, the indirect illuminating device (28, 28A, 28B) illuminating the shading element from the upper side and/or the lower side, **characterized in that** the shading element comprises a lighting effect material which interacts with the illuminating device (28, 28A, 28B), the lighting effect material being made of a phosphorescent and/or fluorescent material which is arranged at the lower side and/or the upper side of the shading element, or being made of phosphorescent and/or fluorescent threads or of a reflective material, which is made of reflective threads, the reflective threads being woven in or knitted in, or comprising a diffuser material, which converts a spot illumination to an areal lighting effect.

2. The shading arrangement according to claim, **characterized in that** the phosphorescent and/or fluorescent material is an imprinted paste.

3. The shading arrangement according to claim 1 or 2, **characterized in that** the shading element comprises a textile web, in particular a roller blind web..

4. The shading arrangement according to claim 3, **characterized in that** the textile web is illuminated from the upper side and is formed as a spacer fabric which is provided with the phosphorescent and/or fluorescent material on the upper side.

5. The shading arrangement according claim 3 or 4, **characterized in that** the illuminating device is integrated into a tension bow of the textile web.

6. The shading arrangement according to any one of the claims 1 to 5, **characterized in that** the shading element is guided in lateral guide tracks (22A, 22B) and the illuminating device is arranged at the guide tracks (22A, 22B)

7. The shading arrangement according to any one of the claims 1 to 6, **characterized in that** the illuminating device (28) comprises LEDs.

8. The shading arrangement according to any one of the claims 1 to 7, **characterized in that** the illuminating device comprises a light conductor and that preferably at least one LED is arranged at at least one end of the light conductor.

## Revendications

1. Ensemble d'ombrage d'une zone de toit transparente d'un véhicule automobile, l'ensemble d'ombrage comprenant un élément d'ombrage de surface qui est déplaçable entre une position d'ombrage et une position découverte et qui comprend un côté inférieur tourné vers un intérieur de véhicule et un côté supérieur tourné vers un environnement de véhicule, un dispositif d'illumination (28, 28A, 28B) indirect étant prévu, le dispositif d'illumination (28, 28A, 28B) indirect illuminant l'élément d'ombrage par son côté supérieur et/ou par son côté inférieur, **caractérisé en ce que** l'élément d'ombrage comprend un matériau d'effet lumineux qui interagit avec le dispositif d'illumination (28, 28A, 28B), le matériau d'effet lumineux étant fait d'un matériau phosphorescent et/ou fluorescent, qui est appliqué au côté inférieur et/ou au côté supérieur de l'élément d'ombrage, ou étant fait de fils phosphorescents et/ou fluorescents ou d'un matériau réflectif, qui est fait de fils réflectifs, les fils réflectifs étant tissés ou tricotés dans un matériau textile de l'élément d'ombrage, ou comprenant un matériau diffuseur, qui convertit une illumination ponctuelle en un effet lumineux de surface.

2. Ensemble d'ombrage selon la revendication 1, **caractérisé en ce que** le matériau phosphorescent et/ou fluorescent est une pâte imprimée.

3. Ensemble d'ombrage selon la revendication 1 ou 2, **caractérisé en ce que** l'élément d'ombrage comprend une bande de textile, notamment une bande de store.

4. Ensemble d'ombrage selon la revendication 3, **caractérisé en ce que** la bande de textile est illuminé par son côté supérieur et est formée comme tricot d'écartement, qui est pourvu du matériau phosphorescent et/ou fluorescent sur son côté supérieur.

5. Ensemble d'ombrage selon la revendication 3 ou 4, **caractérisé en ce que** le dispositif d'illumination est intégré dans un arceau de tension de la bande de textile.

6. Ensemble d'ombrage selon l'une quelconque des revendications 1 à 5, **caractérisé en ce que** l'élément d'ombrage est guidé dans des rails de guidage (22A, 22B) latéraux et le dispositif d'illumination est disposé aux rails de guidage (22A, 22B).

7. Ensemble d'ombrage selon l'une quelconque des revendications 1 à 6, **caractérisé en ce que** le dispositif d'illumination (28) comprend des DEL.

8. Ensemble d'ombrage selon l'une quelconque des revendications 1 à 7, **caractérisé en ce que** le dispositif d'illumination comprend un conduit à lumière et **en ce qu'**au moins une DEL est disposée de préférence sur au moins une extrémité du conduit à lumière.
